# EUROPEAN PATENT APPLICATION

(11) **EP 4 783 265 A1**
(43) Date of publication of application: **29.07.2026**
(21) Application number: 24886256.7
(22) Date of filing: 30.10.2024
(51) Int. Cl.: H01M 4/525, H01M 4/505, H01M 4/131, H01M 10/052, H01M 4/02

(54) **POSITIVE ELECTRODE ACTIVE MATERIAL, POSITIVE ELECTRODE, AND LITHIUM SECONDARY BATTERY**

(30) Priority: 02.11.2023 KR 20230150224
(71) Applicant: LG Chem, Ltd., Seoul 07336 (KR)
(72) Inventor: KIM, Sun Woo, Daejeon 34122 (KR); JUNG, Byoung Hun, Daejeon 34122 (KR); HAM, Mi Rim, Daejeon 34122 (KR); LIM, Chae Jin, Daejeon 34122 (KR); YE, Seong Ji, Daejeon 34122 (KR); LEE, Jun Won, Daejeon 34122 (KR); KIM, Seong Wook, Daejeon 34122 (KR)
(74) Representative: Hoffmann Eitle
(86) International application number: PCT/KR2024/016822
(87) International publication number: WO 2025/095584

(57) **Abstract**

The positive electrode active material according to one embodiment of the present invention may include a lithium composite transition metal oxide represented by Chemical Formula 1 below:

[Chemical Formula 1] LiₐNi_{b}Mn_{c}Ti_{d}ZrₑM_{f}O₂

wherein M is Cr, Nb, Mg, Hf, Ta, La, Sr, Ba, Zn, F, P, S, Y, W, Mo, B, or a combination thereof, and
0.8≤a≤1.2, 0.6≤b<1.0, 0.2≤c≤0.5, 0<d≤0.1, 0<e≤0.1, 0≤f≤0.01, and b+c+d+e+f=1.

## Description

### Technical Field

### [CROSS-REFERENCE TO RELATED APPLICATION]

The present application claims priority to Korean Patent Application No. 2023-0150224, filed on November 2, 2023, the entire content of which is incorporated herein for all purposes by reference.

### [Technical Field]

The present invention relates to a positive electrode active material, and a positive electrode and a lithium secondary battery including the same.

### Background Art

Lithium secondary batteries capable of being repeatedly charged and discharged are in the spotlight as an alternative to fossil fuels. The lithium secondary batteries have been mainly used in traditional hand-held devices such as mobile phones, video cameras, and power tools. However, recently, their application fields have been gradually expanding to electric vehicles (EVs, HEVs, PHEVs), large-capacity power storage systems (ESSs), and uninterruptible power supply systems (UPSs). The lithium secondary batteries include: an electrode assembly comprising unit cells having a structure in which a positive electrode plate and a negative electrode plate having a current collector coated with an active material are disposed with a separator interposed therebetween, and an exterior material, that is, a battery case, that seals and accommodates the electrode assembly together with an electrolyte.

As a positive electrode active material of the lithium secondary batteries, lithium composite transition metal oxides are used, and among them, lithium cobalt oxide of LiCoO₂, lithium manganese oxide (such as LiMnO₂ or LiMn₂O₄), lithium iron phosphate compound (LiFePO₄) or LiNiO₂ are mainly used. In addition, as a method for improving the low thermal stability while maintaining the excellent reversible capacity of LiNiO₂, nickel manganese-based lithium composite metal oxides in which some of the nickel is replaced with manganese, which has excellent thermal stability, and NCM in which some of the nickel is replaced with manganese and cobalt are used.

However, since cobalt has a high cost and causes environmental problems in the supply and demand process of raw materials, research is being conducted recently on a method for manufacturing a cobalt-free positive electrode active material with no or very small cobalt content.

However, in the case of cobalt-free positive electrode active materials, there were problems in that the cation mixing of Li⁺/Ni²⁺ relatively increases due to the lack of cobalt, resulting in inferiority in capacity and initial resistance performance, and operation at a relatively high voltage (4.4 V or higher) is essential in order to overcome the insufficient energy density and capacity performance compared to positive electrode materials with high cobalt content.

Therefore, cobalt-free positive electrode active materials are manufactured in the form of a single particle to prevent cracks due to greater shrinkage and expansion of lattice parameters during the charging and discharging process when operating at high voltage. However, in the case of a single particle as well, when operated at high voltage, deterioration, such as irreversible phase transition due to cation mixing of Li⁺/Ni²⁺, occurs, leading to further deterioration in capacity, life characteristics, and initial resistance performance. Therefore, to prevent this, a doping technology capable of lowering resistance while obtaining structural stability is needed.

### [Prior Art Literature]

### [Patent Documents]

(Patent Document 1) KR 10-2020-0047116 A

### Disclosure

### Technical Problem

An object to be achieved by the present invention is to provide a cobalt-free positive electrode active material having excellent structural stability and excellent life characteristics.

### Technical Solution

(1) The present invention provides a positive electrode active material including a lithium composite transition metal oxide represented by Chemical Formula 1 below:

   [Chemical Formula 1] LiₐNi_{b}Mn_{c}Ti_{d}ZrₑM_{f}O₂

   wherein M is Cr, Nb, Mg, Hf, Ta, La, Sr, Ba, Zn, F, P, S, Y, W, Mo, B, or a combination thereof, and
   0.8≤a≤1.2, 0.5≤b<0.8, 0.2≤c≤0.5, 0<d≤0.1, 0<e≤0.1, 0≤f≤0.01, and b+c+d+e+f=1.
(2) The present invention provides the positive electrode active material according to (1) above, wherein for a half coin cell comprising a positive electrode including the positive electrode active material and a lithium metal negative electrode, when a positive electrode potential at full charge is 4.45 V based on Li potential, a capacity retention rate in 50 or more charge/discharge cycles is 92.5% or more.
(3) The present invention provides the positive electrode active material according to (1) or (2) above, wherein for a half coin cell comprising a positive electrode including the positive electrode active material and a lithium metal negative electrode, when a positive electrode potential at full charge is 4.45 V based on Li potential, an initial resistance value is 45.0 Ω or less.
(4) The present invention provides the positive electrode active material according to any one of (1) to (3) above, wherein in Chemical Formula 1 above, 0.001≤d≤0.05 is satisfied.
(5) The present invention provides the positive electrode active material according to any one of (1) to (4) above, wherein in Chemical Formula 1 above, 0.001≤e≤0.05 is satisfied.
(6) The present invention provides the positive electrode active material according to any one of (1) to (5) above, wherein the positive electrode active material further includes Co in an amount of 0.04 mol% or less based on the total content of Ni, Mn, Ti, Zr, M, and Co.
(7) The present invention provides the positive electrode active material according to any one of (1) to (6) above, wherein the lithium composite transition metal oxide does not include Co.
(8) The present invention provides the positive electrode active material according to any one of (1) to (7) above, wherein Ti and Zr in Chemical Formula 1 above are incorporated into a crystal lattice structure of the lithium composite transition metal oxide.
(9) The present invention provides a positive electrode including the positive electrode active material according to any one of (1) to (8) above.
(10) The present invention provides a lithium secondary battery comprising the positive electrode according to (9) above.

### Advantageous Effects

The positive electrode active material according to the present invention is a cobalt-free positive electrode active material, and has excellent structural stability and excellent life characteristics.

### Best Modes of the Invention

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

In the present invention, the term "average particle diameter (D₅₀)" means a particle diameter at 50% point of a cumulative volume distribution according to the particle diameter. The average particle diameter (D₅₀) can be measured by dispersing the powder to be measured in a dispersion medium and then introducing it into a commercially available laser diffraction particle size measuring device (e.g., S3500 of Microtrac), measuring a difference in diffraction patterns according to the particle size when the particles pass through the laser beam to obtain a particle size distribution, and calculating a particle diameter at a point that is 50% of the cumulative volume distribution according to the particle size in the measuring device.

In the specification below, a cobalt-free positive electrode active material means that a lithium composite transition metal oxide included in the cobalt-free positive electrode active material does not include cobalt, or even when including the cobalt, the amount of cobalt included is 0.04 mol% or less, 0.035 mol% or less, 0.03 mol% or less, 0.025 mol% or less, or 0.02 mol% or less, relative to the total content of all transition metals (including cobalt) included in the lithium composite transition metal oxide.

### <Positive Electrode Active Material>

The present invention provides a positive electrode active material.

In the case of conventional cobalt-free positive electrode active materials, there was a problem in that the cation mixing of Li⁺/Ni²⁺ relatively increases due to the lack of cobalt, resulting in inferior capacity and initial resistance performance, increased resistance increase rate at high temperatures, and decreased lifespan. In particular, in the case of cobalt-free positive electrode active materials having a layered structure and a high-nickel polycrystalline structure containing more than 60 mol% of nickel (Ni) among metals excluding lithium, expansion and contraction of the lattice structure occurs when charging and discharging proceed, and an electrolyte penetrates into the microcracks that occur as a result, resulting in rapid deterioration such as a decrease in lifespan and an increase in resistance. In addition, in the case of polycrystalline positive electrode active materials, there are problems of particle cracks and gas generation due to electrolyte side reactions in a high-voltage driving environment of 4.4 V or higher.

The present inventors have found that when a cobalt-free positive electrode active material is doped with specific metal elements, namely Ti and Zr, in a predetermined amount or more, the initial resistance decreases when driven at a high voltage of 4.4 V or higher, and the capacity retention rate in long-term high voltage/high temperature cycles (4.4 V or higher, 45°C or higher, 50 cycles or higher) is improved, thereby completing the invention.

In the specification below, the fact that a metal element is "doped" into the positive electrode active material may mean that the metal element does not form a chemical bond with the lithium composite transition metal oxide and its constituent elements, but at least some of the metal elements are incorporated into the crystal lattice structure of the lithium composite transition metal oxide to have a physically/crystallographically connected state. In this case, for example, at least some of the metal elements incorporated into the crystal lattice structure of the lithium composite transition metal oxide may be inserted into an empty crystal lattice structure of the lithium composite transition metal oxide and may have a physically/crystallographically connected state without forming a chemical bond with the lithium composite transition metal oxide.

If such metal elements are not doped into the lithium composite transition metal, but a coating layer including such metal elements is formed on the outside of the lithium composite transition metal, it is difficult to obtain an effect of improving stability at the time of the phase transition (H2-H3 phase transition) expressed in high-valenced ion doping such as Ti⁴⁺ and Zr⁴⁺; the metal element coating layer on the surface may act as resistance by impeding the movement of Li⁺ ions during charging and discharging; and when the layered positive electrode active material is driven at a high voltage, the irreversible capacity of the active material increases due to the rapid volume change accompanying the phase transition, and stability problems occur due to side reactions with the electrolyte.

The positive electrode active material according to one embodiment of the present invention includes a lithium composite transition metal oxide represented by Chemical Formula 1 below:

[Chemical Formula 1] LiₐNi_{b}Mn_{c}Ti_{d}ZrₑM_{f}O₂

wherein M is Cr, Nb, Mg, Hf, Ta, La, Sr, Ba, Zn, F, P, S, Y, W, Mo, B, or a combination thereof, and
0.8≤a≤1.2, 0.5≤b<0.8, 0.2≤c≤0.5, 0<d≤0.1, 0<e≤0.1, 0≤f≤0.01, and b+c+d+e+f=1.

According to one embodiment of the present invention, the a represents a molar ratio of lithium in the lithium composite transition metal oxide, and may be 0.8 or more and 1.2 or less, and as specific examples, 0.84 or more, 0.88 or more, 0.92 or more, 0.96 or more, or 1.00 or more, and also 1.18 or less, 1.16 or less, 1.14 or less, 1.12 or less, 1.10 or less, 1.08 or less, 1.06 or less, or 1.04 or less.

According to one embodiment of the present invention, the b represents a molar ratio of nickel in the lithium composite transition metal oxide, and may be 0.5 or more and less than 0.8, and for specific examples, 0.52 or more, 0.54 or more, 0.56 or more, 0.58 or more, or 0.6 or more, and also 0.78 or less, 0.76 or less, 0.74 or less, 0.72 or less, 0.70 or less, or 0.68 or less. When the above range is satisfied, excellent charge/discharge efficiency and excellent life stability can be secured at the same time. When the molar ratio of nickel in the lithium composite transition metal oxide exceeds the above range, stability at high voltage decreases, so stable output and life stability may not be realized. In addition, if the molar ratio of nickel in the lithium composite transition metal oxide is less than the above range, excellent charge/discharge efficiency may not be realized.

According to one embodiment of the present invention, the c represents a molar ratio of manganese in the lithium composite transition metal oxide, and may be 0.2 or more and 0.5 or less, and for specific examples, 0.22 or more, 0.24 or more, 0.26 or more, 0.28 or more, or 0.3 or more, and also 0.48 or less, 0.46 or less, 0.44 or less, 0.42 or less, or 0.4 or less.

According to one embodiment of the present invention, titanium doped in the positive electrode active material exists as a cation, i.e., Ti⁴⁺. Since the Ti⁴⁺ has a size similar to that of nickel, i.e., Ni²⁺, in the lithium composite transition metal oxide (Ti⁴⁺: 0.61Å, Ni²⁺: 0.69Å), it is stably positioned at T_{d} (tetrahedral site), which is the middle point of the path through which Ni ions move, to suppress Ni migration, thereby reducing cation mixing, and enhancing electrochemical characteristics by providing a stable structure.

According to one embodiment of the present invention, the d represents a molar ratio of titanium in the lithium composite transition metal oxide, and may be more than 0 and 0.1 or less, and for specific examples, 0.001 or more, 0.002 or more, 0.003 or more, 0.004 or more, or 0.005 or more, and also 0.09 or less, 0.08 or less, 0.07 or less, 0.06 or less, or 0.05 or less. When titanium is doped in a content less than the above range, the titanium ions do not exhibit the effect of improving electrochemical characteristics, and when titanium is doped in a content exceeding the above range, the doped titanium acts as surface resistance, which may reduce the charge/discharge capacity.

According to one embodiment of the present invention, it is known that doping of Zr⁴⁺ to a layered positive electrode active material promotes the intercalation and deintercalation reaction of lithium ions through expansion of the transition metal-lithium layer. The Zr⁴⁺ has strong binding energy with an oxygen lattice and can improve life stability by suppressing irreversible deformation of a layered structure.

According to one embodiment of the present invention, the e represents a molar ratio of zirconium in the lithium composite transition metal oxide, and may be more than 0 and 0.1 or less, and for specific examples, 0.001 or more, 0.002 or more, 0.003 or more, 0.004 or more, or 0.005 or more, and also 0.09 or less, 0.08 or less, 0.07 or less, 0.06 or less, or 0.05 or less. When zirconium is doped in a content less than the above range, the zirconium ions do not exhibit the effect of improving electrochemical characteristics, and when zirconium is doped in a content exceeding the above range, the doped zirconium acts as surface resistance, which may reduce the charge/discharge capacity.

According to one embodiment of the present invention, the lithium composite transition metal oxide can maximize the stability effect of each layered structure through Ti⁴⁺ doped in the transition metal layer and Zr⁴⁺ doped in the lithium ion layer. In recent research trends, composite doping through analysis of binding energy of metal elements is in the spotlight, and when composite doping of various elements is performed, the binding energy is lower and higher stability can be expected compared to when only one element is doped.

According to one embodiment of the present invention, the f represents a molar ratio of M in the lithium composite transition metal oxide, and may be more than 0 and 0.1 or less, and for specific examples, 0.001 or more, 0.002 or more, 0.003 or more, 0.004 or more, or 0.005 or more, and also 0.09 or less, 0.08 or less, 0.07 or less, 0.06 or less, or 0.05 or less.

According to one embodiment of the present invention, the M may be Cr, Nb, Mg, Hf, Ta, La, Sr, Ba, F, P, S, Zr, Zn, Y, Ti, W, Mo, B, or a combination thereof.

By having the composition as described above, the positive electrode active material according to one embodiment of the present invention can have a reduced initial resistance when driven at a high voltage of 4.4 V or higher, and an improved capacity retention rate in a long-term high voltage/high temperature cycle (4.4 V or higher, 45°C or higher, 50 cycles or higher).

According to one embodiment of the present invention, when the positive electrode potential at full charge is 4.45 V based on the Li potential, the positive electrode active material can have a capacity retention rate of 92.5% or higher, and specifically, 92.8% or higher, 93% or higher, 93.3% or higher, 93.4% or higher, 93.5% or higher, 93.6% or higher, 93.7% or higher, or 93.8% or higher in 50 or more charge/discharge cycles.

According to one embodiment of the present invention, when the positive electrode potential at full charge is 4.45 V based on the Li potential, the positive electrode active material can have an initial resistance value of 45.0 Ω or less, and specifically, 44.4 Ω or less, 44.3 Ω or less, 44.2 Ω or less, 44.1 Ω or less, 44 Ω or less, 43.9 Ω or less, or 43.8 Ω or less.

### <Method for Manufacturing Positive Electrode Active Material>

The present invention provides a method for manufacturing the positive electrode active material.

A method for manufacturing a positive electrode active material according to one embodiment of the present invention includes the steps of: forming a precursor particle for a positive electrode active material by performing a coprecipitation reaction while supplying a transition metal-containing solution containing a transition metal-containing raw material including nickel and manganese, an ammonium cation complex forming agent, and a basic compound to a reactor; washing the precursor particle for a positive electrode active material with water to prepare a precursor for a positive electrode active material; and mixing the precursor for a positive electrode active material, a lithium raw material, and a doping element raw material including Ti and Zr, and calcining at 800°C to 950°C.

According to one embodiment of the present invention, the step of forming the precursor particle for the positive electrode active material may be performed by, for example, dissolving each transition metal-containing raw material in a solvent to prepare a transition metal-containing solution, mixing the transition metal-containing solution, an ammonium cation complex forming agent, and a basic compound, and then performing a coprecipitation reaction. In addition, an oxidizing agent or oxygen gas may be further added during the coprecipitation reaction, if necessary.

According to one embodiment of the present invention, the transition metal-containing raw material may be an acetate, a carbonate, a nitrate, a sulfate, a halide, a sulfide, etc. of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, nickel sulfide, Mn₂O₃, MnO₂, Mn₃O₄, MnCO₃, Mn(NO₃)₂, MnSO₄·H₂O, manganese acetate, manganese halide, manganese sulfide, etc.

According to one embodiment of the present invention, the ammonium cation complex forming agent may be at least one selected from the group consisting of NH₄OH, (NH₄)₂SO₄, NH₄NO₃, NH₄Cl, CH₃COONH₄, and NH₄CO₃.

According to one embodiment of the present invention, the basic compound may be at least one selected from the group consisting of NaOH, Na₂CO₃, KOH, and Ca(OH)₂. The form of the precursor may vary depending on the type of the basic compound used. For example, when NaOH is used as the basic compound, a precursor in the form of a hydroxide can be obtained, and when Na₂CO₃ is used as the basic compound, a precursor in the form of a carbonate can be obtained. In addition, when a basic compound and an oxidizing agent are used together, a precursor in the form of an oxide can be obtained.

According to one embodiment of the present invention, the precursor for the positive electrode active material may be in the form of a hydroxide, an oxide, or a carbonate.

According to one embodiment of the present invention, the step of washing the precursor particles for the positive electrode active material with water may be performed using deionized water, and it is preferable that no other substance is added during the washing.

According to one embodiment of the present invention, the lithium raw material may be, for example, a lithium-containing carbonate (e.g., lithium carbonate, etc.), a hydrate (e.g., lithium hydroxide hydrate (LiOH·H₂O), etc.), a hydroxide (e.g., lithium hydroxide, etc.), a nitrate (e.g., lithium nitrate (LiNO₃), etc.), a chloride (e.g., lithium chloride (LiCl), etc.), etc., and one alone or a mixture of two or more thereof may be used.

According to one embodiment of the present invention, the precursor for the positive electrode active material and the lithium raw material may be mixed in an amount such that the molar ratio of the total transition metal (Ni+Mn):Li is 1:1.02 to 1:1.2, preferably 1:1.03 to 1:1.15, more preferably 1:1.06 to 1:1.1.

According to one embodiment of the present invention, the calcination may be performed at a temperature of 800°C to 950°C, preferably 850°C to 950°C, and more preferably 870°C to 920°C. When the calcination temperature is 800°C or higher, the degree of structural perfection can be improved, but it is preferable not to exceed 950°C in order to prevent excessive growth of primary particles. The calcination time may be 5 hours to 20 hours, and preferably 9 hours to 15 hours. In addition, the calcination atmosphere may be an atmospheric atmosphere or an oxygen atmosphere, and for example, an atmosphere containing 20 to 100 volume% of oxygen.

### <Positive Electrode>

According to one embodiment of the present invention, a positive electrode including the positive electrode active material described above is provided.

Specifically, the positive electrode includes a positive electrode current collector and a positive electrode active material layer formed on the positive electrode current collector and including the positive electrode active material.

According to one embodiment of the present invention, the positive electrode current collector is not particularly limited as long as it has conductivity without causing a chemical change in the battery, and may be, for example, stainless steel, aluminum, nickel, titanium, calcined carbon, or aluminum or stainless steel having a surface treated with carbon, nickel, titanium, silver, etc. Additionally, the positive electrode current collector may typically have a thickness of 3 to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

According to one embodiment of the present invention, the positive electrode active material layer, along with the positive electrode active material described above, may include a conductive material and a binder.

According to one embodiment of the present invention, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be typically included in an amount of 1 to 30% by weight based on the total weight of the positive electrode active material layer.

According to one embodiment of the present invention, the binder serves to improve the bonding between the positive electrode active material particles and the adhesion between the positive electrode active material and the current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylenepropylene-diene polymer (EPDM), sulfonated-EPDM, styrene-butadiene rubber (SBR), fluorine rubber, or various copolymers thereof, and any one or a mixture of two or more thereof may be used. The binder may be included in an amount of 1 to 30% by weight based on the total weight of the positive electrode active material layer.

According to one embodiment of the present invention, the positive electrode may be manufactured according to a conventional positive electrode manufacturing method except for the use of the positive electrode active material described above. Specifically, it may be manufactured by applying a composition for forming a positive electrode active material layer onto a positive electrode current collector, and then drying and rolling, wherein the composition is prepared by mixing or dispersing the above-mentioned positive electrode active material and optionally, a binder and a conductive material in a solvent. The types and contents of the positive electrode active material, binder, and conductive material are as described above.

According to one embodiment of the present invention, the solvent may be any solvent commonly used in the art, for example, dimethyl sulfoxide (DMSO), isopropyl alcohol, N-methyl pyrrolidone (NMP), acetone, water, or the like, and any one or a mixture of two or more thereof may be used. The solvent may be used in an amount sufficient to dissolve or disperse the positive electrode active material, conductive material, and binder in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the composition for forming the positive electrode active material layer on a separate support, peeling a film from the support, and then laminating the film on a positive electrode current collector.

### <Lithium Secondary Battery>

According to one embodiment of the present invention, an electrochemical device including the positive electrode is provided. The electrochemical device may be specifically a battery, a capacitor, etc., and more specifically, a lithium secondary battery.

According to one embodiment of the present invention, specifically, the lithium secondary battery includes a positive electrode, a negative electrode positioned opposite the positive electrode, and a separator and electrolyte interposed between the positive electrode and the negative electrode, wherein the positive electrode is as described above. In addition, the lithium secondary battery may optionally further include a battery container for accommodating an electrode assembly formed of the positive electrode, negative electrode, and separator, and a sealing member for sealing the battery container.

According to one embodiment of the present invention, in the lithium secondary battery, the negative electrode includes a negative electrode current collector and a negative electrode active material layer positioned on the negative electrode current collector.

According to one embodiment of the present invention, the negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

According to one embodiment of the present invention, the negative electrode active material layer includes a binder and a conductive material along with the negative electrode active material.

According to one embodiment of the present invention, as the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiOₓ(0 < x < 2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

In addition, the binder and the conductive material may be the same as described in the positive electrode above.

According to one embodiment of the present invention, for example, the negative electrode active material layer may be manufactured by applying a negative electrode-forming composition, which is prepared by dispersing a negative electrode active material, and optionally a binder and a conductive material in a solvent, onto a negative electrode current collector and drying the same. Alternatively, it may also be manufactured by casting the negative electrode-forming composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

According to one embodiment of the present invention, as the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

According to one embodiment of the present invention, the lithium salt may be any compound without particular limitation as long as it can provide lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

According to one embodiment of the present invention, in order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

According to one embodiment of the present invention, as described above, since the lithium secondary battery including the positive electrode active material according to the present invention stably exhibits excellent discharge capacity, output characteristics, and capacity retention rate, it is useful in the field of portable devices such as mobile phones, laptop computers, digital cameras, and electric vehicles such as hybrid electric vehicle (HEV).

Hereinafter, examples of the present invention will be described in detail so that those skilled in the art can easily implement the present invention. However, the present invention may be embodied in a variety of forms and is not limited to the examples described herein.

### Example 1

A positive electrode active material precursor Ni_{0.77}Mn_{0.23}(OH)₂ having an average particle diameter of 9 µm, a TiO₂ raw material and a ZrO₂ raw material, which were weighed in amounts of 1 mol% and 0.24 mol% of the precursor, respectively, and a lithium raw material LiOH H₂O were simultaneously added to a paste mixer (300 cc) so that the final Li/Me(Ni, Mn) molar ratio was 1.07, thereby preparing a mixture. The mixture was mixed using an acoustic mixer at 40 gravitational force (G) for 1 minute, then at 50 G for 1 minute, then at 60 G for 1 minute, and then at 70 G for 1 minute, so that a total of 4 minutes of mixing was performed. The mixed powder was placed in an alumina crucible having a size of 200 cc, and calcined in an oxygen (O₂) atmosphere at 810°C for 9 hours to produce a positive electrode active material.

### Example 2

A positive electrode active material was produced in the same manner as in Example 1, except that the TiO₂ raw material was weighed in an amount of 2 mol% of the precursor.

### Comparative Example 1

A positive electrode active material was produced in the same manner as in Example 1, except that 1 mol% of a TiO₂ raw material and 0.24 mol% of a ZrO₂ raw material were not added.

### Comparative Example 2

A positive electrode active material was produced in the same manner as in Example 1, except that 0.24 mol% of a ZrO₂ raw material was not added.

### Comparative Example 3

A positive electrode active material was produced in the same manner as in Example 1, except that 1 mol% of a TiO₂ raw material was not added.

### Comparative Example 4

A positive electrode active material precursor Ni_{0.77}Mn_{0.23}(OH)₂ having an average particle diameter of 9 µm, and a lithium raw material LiOH H₂O were simultaneously added to a paste mixer (300 cc) so that the final Li/Me(Ni, Mn) molar ratio was 1.07. The mixture was mixed using an acoustic mixer at 40 gravitational force (G) for 1 minute, then at 50 G for 1 minute, then at 60 G for 1 minute, and then at 70 G for 1 minute, so that a total of 4 minutes of mixing was performed. The mixed powder was placed in an alumina crucible having a size of 200 cc, and calcined in an oxygen (O₂) atmosphere at 810°C for 9 hours to produce a positive electrode active material.

Thereafter, the produced positive electrode active material, and a TiO₂ raw material and a ZrO₂ raw material, which were weighed in amounts of 1 mol% and 0.24 mol% of the transition metal moles in the positive electrode active material, respectively, were simultaneously added to a paste mixer (300 cc) to prepare a mixture. The mixture was mixed using an acoustic mixer at 60 G for 2 minutes, so that a total of 2 minutes of mixing was performed. The mixed powder was placed in an alumina crucible having a size of 200 cc, and calcined in an oxygen (O₂) atmosphere at 700°C for 6 hours and 30 minutes to produce a positive electrode active material coated with TiO₂ and ZrO₂.

### Comparative Example 5

A positive electrode active material precursor Ni_{0.78}Co_{0.02}Mn_{0.2}(OH)₂ having an average particle diameter of 9 µm, a TiO₂ raw material, a ZrO₂ raw material, a Co(OH)₂ raw material, which were weighed in amounts of 1 mol%, 0.24 mol%, and 3 mol% of the precursor, respectively, and a lithium raw material LiOH H₂O were simultaneously added to a paste mixer (300 cc) so that the final Li/Me(Ni,Co,Mn) molar ratio was 1.07, thereby preparing a mixture. The mixture having a Co content of 5 mol% was mixed using an acoustic mixer at 40 gravitational force (G) for 1 minute, then at 50 G for 1 minute, then at 60 G for 1 minute, and then at 70 G for 1 minute, so that a total of 4 minutes of mixing was performed. The mixed powder was placed in an alumina crucible having a size of 200 cc, and calcined in an oxygen (O₂) atmosphere at 810°C for 9 hours to produce a positive electrode active material.

### Comparative Example 6

A positive electrode active material precursor Ni_{0.85}Mn_{0.15}(OH)₂ having an average particle diameter of 9 µm, a TiO₂ raw material and a ZrO₂ raw material, which were weighed in amounts of 1 mol% and 0.24 mol% of the precursor, respectively, and a lithium raw material LiOH H₂O were simultaneously added to a paste mixer (300 cc) so that the final Li/Me(Ni, Mn) molar ratio was 1.07, thereby preparing a mixture. The mixture was mixed using an acoustic mixer at 40 gravitational force (G) for 1 minute, then at 50 G for 1 minute, then at 60 G for 1 minute, and then at 70 G for 1 minute, so that a total of 4 minutes of mixing was performed. The mixed powder was placed in an alumina crucible having a size of 200 cc, and calcined in an oxygen (O₂) atmosphere at 800°C for 9 hours to produce a positive electrode active material.

### Experimental Example 1 - Measurement of Element Content

The element content of each positive electrode active material produced in the above examples and comparative examples was measured by SEM-EDS analysis using FESEM (JSM7610F, Jeol), and was listed in Table 1 below. The EDS system scans a sample with X-rays of a specific wavelength band, and then analyzes the amount of unique energy emitted by each element to indicate the abundance of the element.

**[Table 1]**

| Transition metal (mol %) | Example | | Comparative example | | | | | |
|---|---|---|---|---|---|---|---|---|
| | 1 | 2 | 1 | 2 | 3 | 4 | 5 | 6 |
| Ni | 76.40 | 74.46 | 77.09 | 76.12 | 76.54 | 77.01 | 74.11 | 84.44 |
| Co | - | - | - | - | - | - | 5.02 | - |
| Mn | 22.43 | 23.43 | 22.91 | 22.94 | 23.18 | 21.70 | 19.77 | 14.28 |
| Ti | 0.95 | 1.92 | - | 0.94 | - | 1.02 | 0.92 | 1.04 |
| Zr | 0.22 | 0.19 | - | - | 0.28 | 0.27 | 0.18 | 0.24 |

### Experimental Example 2 - Evaluation of Life Characteristics

Each positive electrode active material produced in the examples and comparative examples, carbon black as a conductive material, and PVDF as a binder were mixed in a weight ratio of 97.5:1:1.5 in N-methylpyrrolidone solvent to prepare a positive electrode slurry, which was then applied to an aluminum current collector, dried at 130°C, and rolled to a porosity of 24% to manufacture a positive electrode. Lithium metal was used as a negative electrode.

Lithium metal was used as a counter electrode, and a half coin cell was manufactured by using a porous polyethylene separator and an electrolyte composed of 1.0 M lithium hexafluorophosphate (LiPF₆) in a mixture of ethylene carbonate (EC)/ethyl methyl carbonate (EMC)/diethyl carbonate (DEC) (volume ratio = 3/4/3).

For each lithium secondary battery half coin cell manufactured as described above, the capacity retention rate was measured when 50 charge/discharge experiments were performed by charging in CC/CV mode up to 4.45 V at 0.5 C at 45°C and then discharging to 2.5 V at constant current of 1 C, and the results were listed in Table 2 below.

### Experimental Example 3 - Evaluation of Charge/Discharge Efficiency and Resistance Characteristics

Each positive electrode active material produced in the examples and comparative examples, carbon black as a conductive material, and PVDF as a binder were mixed in a weight ratio of 97.5:1:1.5 in N-methylpyrrolidone solvent to prepare a positive electrode slurry, which was then applied to an aluminum current collector, dried at 130°C, and rolled to a porosity of 24% to manufacture a positive electrode. Lithium metal was used as a negative electrode.

Lithium metal was used as a counter electrode, and a half coin cell was manufactured by using a porous polyethylene separator and an electrolyte composed of 1.0 M lithium hexafluorophosphate (LiPF₆) in a mixture of ethylene carbonate (EC)/ethyl methyl carbonate (EMC)/diethyl carbonate (DEC) (volume ratio = 3/4/3).

For each lithium secondary battery half coin cell manufactured as described above, the charge/discharge efficiency, which is defined as a ratio of the discharge capacity to the charge capacity, and the initial resistance were measured using a voltage change for 60 seconds when charging in CC/CV mode up to 4.45 V at 0.1 C at 25°C and then discharging to 2.5 V at constant current of 0.1 C, and the results were listed in Table 2 below.

**[Table 2]**

| | 4.45V, 0.1C charging/discharging | | 4.45V, 45°C 50 cycle |
|---|---|---|---|
| | Charge/Discharge efficiency (%) | Initial resistance (Ω) | Capacity retention rate (%) |
| Example 1 | 88.6 | 43.8 | 93.8 |
| Example 2 | 88.1 | 42.7 | 92.7 |
| Comparative Example 1 | 89.2 | 49 | 86.6 |
| Comparative Example 2 | 88.6 | 45.8 | 91.3 |
| Comparative Example 3 | 88.5 | 46.8 | 92.1 |
| Comparative Example 4 | 89.5 | 55.4 | 94.3 |
| Comparative Example 5 | 90.1 | 45.8 | 89.1 |
| Comparative Example 6 | 91.0 | 47.1 | 90.8 |

Referring to Tables 1 and 2 above, it could be confirmed that in the case of Examples 1 and 2 in which Ti and Zr were compositely doped, low initial resistance and excellent capacity retention rate were secured.

In the case of Comparative Example 4 in which Ti and Zr were coated, it could be confirmed that the initial resistance was significantly inferior compared to Examples 1 and 2. This is interpreted that the Ti and Zr coating layer formed on the particle surface acts as resistance in the intercalation and deintercalation reactions of lithium ions.

In the case of Comparative Example 5 in which 5 mol% of Co was doped, it could be confirmed that the capacity retention rate was inferior compared to Examples 1 and 2.

In the case of Comparative Example 6 in which the Ni content was 80% or more, it could be confirmed that the initial resistance and capacity retention rate were inferior compared to Examples 1 and 2.

## Claims

1. A positive electrode active material comprising a lithium composite transition metal oxide represented by Chemical Formula 1 below:
[Chemical Formula 1] LiₐNi_{b}Mn_{c}Ti_{d}ZrₑM_{f}O₂
wherein M is Cr, Nb, Mg, Hf, Ta, La, Sr, Ba, Zn, F, P, S, Y, W, Mo, B, or a combination thereof, and
0.8≤a≤1.2, 0.5≤b<0.8, 0.2≤c≤0.5, 0<d≤0.1, 0<e≤0.1, 0≤f≤0.01, and b+c+d+e+f=1.

2. The positive electrode active material according to claim 1, wherein for a half coin cell comprising a positive electrode including the positive electrode active material and a lithium metal negative electrode, when a positive electrode potential at full charge is 4.45 V based on Li potential, a capacity retention rate in 50 or more charge/discharge cycles is 92.5% or more.

3. The positive electrode active material according to claim 1, wherein for a half coin cell comprising a positive electrode including the positive electrode active material and a lithium metal negative electrode, when a positive electrode potential at full charge is 4.45 V based on Li potential, an initial resistance value is 45.0 Ω or less.

4. The positive electrode active material according to claim 1, wherein in Chemical Formula 1 above, 0.001≤d≤0.05 is satisfied.

5. The positive electrode active material according to claim 1, wherein in Chemical Formula 1 above, 0.001≤e≤0.05 is satisfied.

6. The positive electrode active material according to claim 1, wherein the positive electrode active material further includes Co in an amount of 0.04 mol% or less based on the total content of Ni, Mn, Ti, Zr, M, and Co.

7. The positive electrode active material according to claim 1, wherein the lithium composite transition metal oxide does not include Co.

8. The positive electrode active material according to claim 1, wherein Ti and Zr in Chemical Formula 1 above are incorporated into a crystal lattice structure of the lithium composite transition metal oxide.

9. A positive electrode comprising the positive electrode active material according to any one of claims 1 to 8.

10. A lithium secondary battery comprising the positive electrode according to claim 9.
